**Europäisches Patentamt**

(19) **European Patent Office**

**Office européen des brevets**

(11) Numéro de publication: **0 087 998**
**B1**

(12) FASCICULE DE BREVET EUROPEEN

(45) Date de publication du fascicule du brevet:
**21.08.85**

(21) Numéro de dépôt: **83400319.6**

(22) Date de dépôt: **15.02.83**

(51) Int. Cl.⁴: **G 02 B 27/00**, G 02 C 11/00,
F 41 G 3/22

(54) **Appareil viseur, notamment pour réaliser un viseur de tête.**

(30) Priorité: **26.02.82 FR 8203261**

(43) Date de publication de la demande:
**07.09.83 Bulletin 83/36**

(45) Mention de la délivrance du brevet:
**21.08.85 Bulletin 85/34**

(84) Etats contractants désignés:
**DE GB**

(56) Documents cités:
**EP - A - 0 021 906**
**US - A - 3 463 885**
**US - A - 3 936 605**
**US - A - 4 257 691**

(73) Titulaire: **THOMSON-CSF, 173, Boulevard Haussmann,
F-75379 Paris Cedex 08 (FR)**

(72) Inventeur: **Reymond, Jean-Claude, THOMSON-CSF
SCPI 173, bld Haussmann, F-75379 Paris Cedex 08 (FR)**

(74) Mandataire: **Troceiller, Roger et al, THOMSON-CSF
SCPI 173, Bld Haussmann, F-75379 Paris Cedex 08 (FR)**

BUNDESDRUCKEREI BERLIN

## Description

La présente invention concerne un appareil viseur, c'est-à-dire un dispositif optique servant à viser et qui est généralement utilisé pour la désignation de cible en vue tir ou bombardement.

La conduite de tir, en particulier sur avion de combat en tir air-air ou en tir air-sol, nécessite de plus en plus que l'opérateur (tireur ou pilote) puisse désigner très rapidement l'objectif.

La désignation se fait dans ce contexte à l'aide généralement d'un collimateur tête haute fixé sur l'avion dans le poste de pilotage, ou monté sur le casque du pilote. Ces collimateurs optiques permettent l'observation à l'infini de l'image d'un objet lumineux réel, en superposition avec la scène extérieure. Dans l'application au pointage d'arme et à la désignation d'objectif, le champ utilisé peut être réduit étant donné que l'objet à projeter peut consister en un seul réticule. Ces systèmes, appelés viseurs en accord avec la fonction assumée, peuvent être réalisés notamment en utilisant comme optique une surface courbe de la visière du casque rendue semi-transparente. Il faut en effet considérer que pour ces matériels, en particulier ceux montés sur casque, les critères d'encombrement et de poids réduits sont impératifs, ainsi qu'une grande simplicité d'emploi et un accroissement des performances. Ceci est d'autant plus important pour un viseur de casque que le collimateur doit être complété par un système de repérage de direction pour connaître à tout moment la direction de l'axe optique de visée par rapport à une direction de référence. Ces systèmes de repérage peuvent être de type optique ou magnétique et comportent une partie montée sur le casque et une partie fixée à l'avion. Le pilote doit supporter le poids de ces divers équipements multiplié par le facteur de charge et on conçoit aisément que tout allègement est le bienvenu.

L'invention a pour objet de réaliser un appareil viseur très léger et de très faible encombrement qui peut notamment être monté sur la visière du casque ou exécuté sous forme d'une simple paire de lunettes; le viseur ne comporte pas à proprement parler de collimateur optique et permet cependant à l'opérateur de disposer en permanence d'un réticule de visée vu à l'infini. Il est statique et peut en outre être équipé de voyants lumineux pour indiquer, par exemple, des informations directionnelles, ou des ordres divers, ou l'état du système d'arme.

Suivant l'invention, il est réalisé un viseur comportant des moyens de visualisation simultanée du paysage et d'une image projetée à l'infini sur un axe optique de visée, combinés le cas échéant avec des moyens de repérage de la direction de cet axe par rapport à une direction de référence, et dans lequel les moyens de visualisation utilisent un dispositif générateur d'interférences par des lames cristallines, ce dispositif groupant une lame cristalline biréfringente à faces parallèles placée entre deux lames jouant le rôle des filtres optiques de polarisation, respectivement un polariseur et un analyseur, pour produire ladite image sous forme de franges d'interférences localisées à l'infini à partir de la lumière incidente provenant du paysage observé, l'axe optique de visée correspondant à l'axe cristallographique de la lame biréfringente taillée perpendiculairement à cette direction.

Les particularités de l'invention apparaîtront dans la description qui suit, donnée à titre d'exemple à l'aide des figures annexées qui représentent:

Fig. 1, un schéma synotique d'un viseur conforme à la présente invention;

Fig. 2, un exemple de réticule de visée formé par des franges d'interférences;

Fig. 3, une réalisation d'un viseur selon l'invention utilisant une paire de lunettes;

Fig. 4, une coupe transversale du viseur dans la réalisation selon la Fig. 3;

Fig. 5, un autre mode de réalisation d'un viseur selon l'invention utilisant la visière d'un casque.

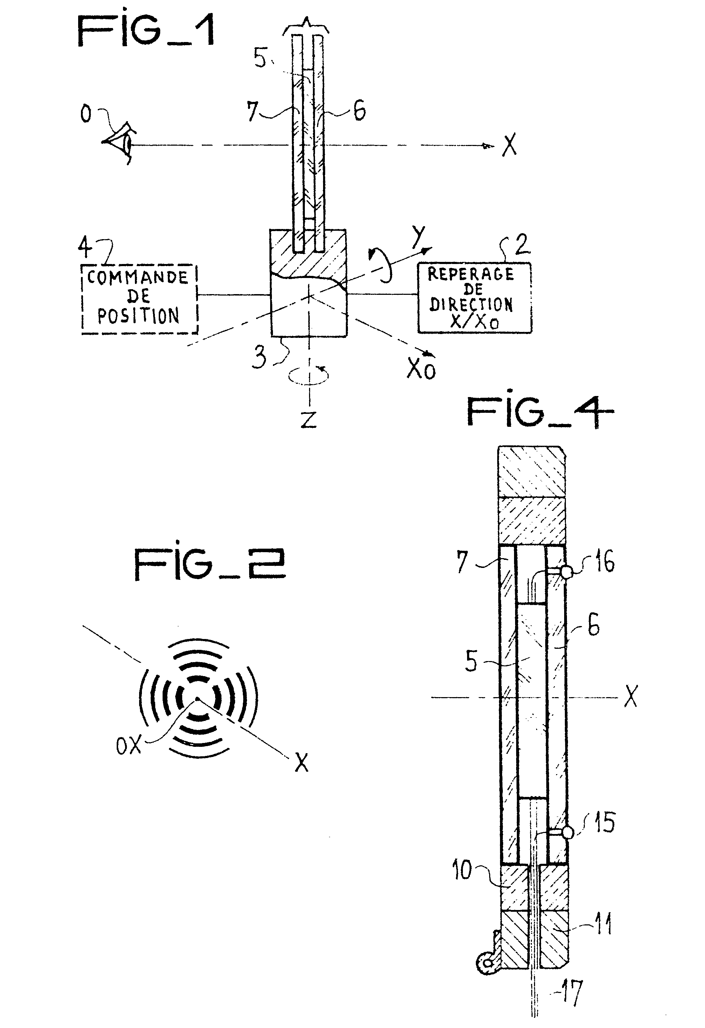

En se reportant à la Fig. 1, le viseur comporte des moyens de visualisation 1 permettant la visualisation simultanée du paysage et d'une image projetée à l'infini sur un axe optique de visée X. Les moyens de visualisation 1 sont généralement combinés avec des moyens de repérage 2 pour connaître à tout moment la direction de cet axe par rapport à une direction de référence, par exemple la direction Xo représentée.

Pour faciliter la compréhension, les deux dispositifs 1 et 2 sont représentés couplés par l'intermédiaire d'un organe mécanique support 3 sur lequel se trouve fixé le moyen de visualisation 1; en outre, le déplacement de la ligne de visée X de l'opérateur dont un oeil est figuré en 0 est symbolisé par un moyen de commande de position 4 et deux axes orthogonaux de rotation Y et Z. Le bloc 4 est en pointillé car il peut s'agir d'une commande de l'opérateur lui-même, commande manuelle ou par des mouvements de la tête selon le mode d'exécution du viseur; ce bloc ne représente donc pas nécessairement un dispositif ou un circuit. Dans le même esprit on verra que selon la version retenue, le couplage du moyen de repérage 2 au support 3 est réalisable de diverses façons.

Conformément à l'invention, le moyen de visualisation 1 est réalisé sous forme statique, il est constitué par une lame cristalline biréfringente à faces parallèles 5 placée entre deux filtres optiques de polarisation 6 et 7 jouant respectivement le rôle de polariseur et d'analyseur et ayant également une configuration de lames. Ce montage d'une lame cristalline avec des nicols est connu en soi, on pourra se reporter notamment à l'ouvrage »Optique« de G. Bruhat édité par Masson et Cie, au chapitre intitulé »Interférences produites par les lames cristallines« et au chapitre »Rayons lumineux dans un milieu anisotrope« § 2 »Réfraction des rayons lumineux«. La présence des filtres de polarisation 6 et 7, appelés polariseurs dans ce qui suit par souci de simplification, permet l'observation de franges d'interférences produites par la lumière dans la lame cristalline 5. Lorsque l'éclairage de cette lame s'effectue par une source étendue, ce qui est le cas ici puisque la lumière provient du paysage extérieur observé, les franges d'interférences sont localisées à l'infini. La partie de la lumière incidente provenant de la scène extérieure et dont la polarisation correspond à celle du montage le traverse et peut ainsi aboutir à l'oeil en 0 permettant la vision de cette scène par l'observateur. La partie restante de lumière incidente interfère et produit les franges visualisées à l'infini.

L'état de polarisation du montage dépend de la position relative et de la nature des polariseurs 6 et 7. Par nature, on entend le type de polarisation, linéaire ou circulaire, cette dernière étant obtenue par adjonction d'une lame quart d'onde. Par position relative, on entend une rotation autour de l'axe X d'un polariseur par rapport à l'autre. On peut ainsi obtenir différentes figures d'interférences dont un exemple est schématisé sur la Fig. 2. Les franges sont formés d'anneaux dont les rayons varient selon une loi analogue à celle des rayons des anneaux de Newton, les rayons étaient inversement proportionnels à la racine carré de l'épaisseur de la lame 5. La Fig. 2 correspond à des franges d'interférences qui peuvent être produites en lumière blanche avec des polariseurs à polarisation linéaire.

Entre polariseurs croisés, la figure obtenue est celle d'anneaux concentriques à centre noir, coupée par une croix noire; entre polar parallèles la figure est celle des anneaux à centre blanc, coupée par une croix blanche. Cette version correspond à celle représentée sur la Fig. 2, préférable pour l'utilisation viseur de tête envisagée étant donné la nécessité d'observer simultanément le paysage à travers l'appareil. Une représentation de franges circulaires sans croix peut être obtenue des polariseurs à polarisation circulaire.

Suivant l'invention ces franges d'interférences sont utilisées comme réticule de visée ou de tir du fait d'une part, qu'elles sont localisées à l'infini comme dans le cas d'une image collimatée et d'autre part, que les anneaux sont concentriques sur l'axe optique du système (indiqué par sa trace OX sur la Fig. 2) qui constitue l'axe X de visée. Cet axe correspond également à l'axe cristallographique de la lame 5 qui est taillée en conséquence. Dans le cas d'une lame 5 à faces planes représentée, le plan des faces est orthogonal à la direction X; ceci n'exclu pas d'autres modes de réalisation à faces parallèles mais non obligatoirement planes, notamment pour faciliter l'intégration sur une visière de casque. La lame cristalline 5 est choisie en un matériau à forte biréfringence, de préférence du spath d'Islande.

Le viseur optique statique ainsi réalisé permet l'observation simultanée d'un paysage et d'un réticule interférentiel, ce dernier étant formé sans l'aide d'une source lumineuse particulière positionnée au foyer d'une optique collimatrice. Le contraste du réticule est constant. La direction de visée X définie par le réticule ne dépend que de la direction cristallo-graphique de la lame cristalline 5. La conformation du réticule à base d'anneaux concentriques permet aisément d'amener en coïncidence visuelle l'axe X du réticule avec un point précis du paysage, ce qui constitue la visée proprement dite.

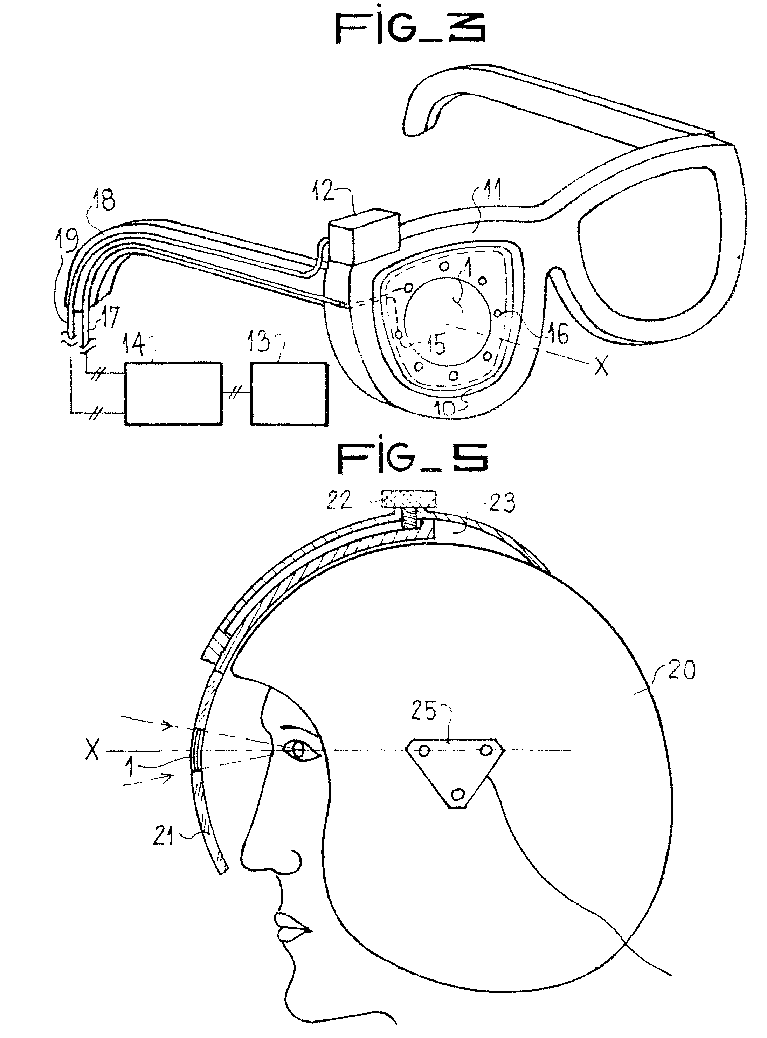

Les Figs. 3 et 4 ont trait à une réalisation préférentielle sous forme d'une paire de lunettes, étant entendu que l'ensemble viseur peut être monté sur tout support mécanique solidaire de l'équipement général (installation fixe, ou mobile: cas de véhicule terrestre, maritime ou aérien) ou dépendant de cet équipement (cas de montage sur casque).

Le viseur 1 est monté centré dans un des verres, par exemple dans le verre droit 10; la Fig. 4 en donne une coupe transversale passant par l'axe X. A noter que si le viseur 1 est de dimension suffisante, il peut occuper toute la surface du verre et être monté directement sur la monture 11.

Le moyen de repérage de la direction X est dans l'exemple représenté du type magnétique comportant un capteur 12 solidaire de la paire de lunettes, un radiateur 13 solidaire de l'avion (ou de l'installation considérée) et des circuits de traitement 14 avec calculateur annexe. Un tel dispositif de mesure est décrit dans le brevet français n° 2 458 838. Le capteur et le radiateur comportent chacun un montage à trois bobines définissant les axes d'un trièdre cartésien. Le capteur est réalisable sous faible dimension, par exemple sous forme d'un cube de 10 mm de côté environ.

De plus, avant ou pendant l'opération de visée proprement dite, l'opérateur peut avoir besoin d'informations diverses. Dans le cas d'un pilote d'avion de combat il peut être utile de lui fournir une information de direction préalable pour rechercher rapidement la cible dans le paysage. Cette information est transmise par un changement d'état (allumé, éteint, clignotant) et éventuellement par la couleur de voyants disposés autour du viseur proprement dit, c'est-à-dire hors du champ de vision des franges d'interférences. Dans la réalisation Fig. 3 et Fig. 4, ces voyants sont constitués par des diodes électroluminescentes, telles les diodes référencées 15 et 16. Ces diodes peuvent être au nombre de huit, disposées en cercle à 45° l'une de l'autre, pour indiquer une direction grossière.

L'information par alimentation des diodes est produite par un circuit de calcul ou calculateur annexe 14. Ce circuit 14 de commande d'allumage des diodes peut être lui-même piloté directement par l'opérateur qui veut désigner une direction, ou à l'aide d'un moyen de détection élaboré, par exemple un radar de bord, pour traduire automatiquement la direction d'une cible en ordre d'allumage d'une diode correspondante en sorte que le pilote oriente la tête vers cette direction pour rallier rapidement la cible.

De façon à mieux préciser le mouvement à effectuer, les diodes peuvent être commandées pour faire clignoter celle la plus proche de la direction à viser à une fréquence qui est une fonction croissante de dépointage angulaire qui reste à corriger; lorsque la direction de visée du pilote est éloignée de la direction qu'il doit rallier, la fréquence sera élevée, une dizaine d'hertz par exemple; au fur et à mesure que la tête effectue le ralliement, la fréquence va diminuer et devenir très faible, de l'ordre de 1 hz par exemple pour un écart de 1 à 2 mrd; les diodes s'éteignent dès que le ralliement est assuré.

L'alimentation est conduite par un faisceau de fils 17 qui chemine par exemple le long d'une branche 18 et après traversée de la monture 11 et du verre 10, par vient aux différentes diodes dans un espace annulaire ménagé entre les lames polariseurs 6 et 7, la lame 5 étant de diamètre inférieur à celui des lames polariseurs. En utilisant des fils très fins, ceux-ci ne sont pas décelés par l'œil et ne gênent pas l'observateur. La fasceau 19 de connexion des bobines du capteur 12 peut être disposé à côté de celui 17 d'alimentation des diodes. L'ensemble des deux faisceaux reste très souple et ne procure pas de gène à l'opérateur lors des mouvements de la tête.

Il peut être prévu un dispositif de réglage en hauteur et en largeur (écart interpupillaire) pour bien centrer le viseur sur la ligne de visée de l'opérateur et adapter ainsi le montage a la conformation visuelle présentée.

La Fig. 5 représente un autre exemple de réalisation sur un casque 20. Le viseur optique statique 1 est intégré sur la visière 21 qui est rendue mobile par déblocage de la vis 22 et coulissement dans un logement 23. Ainsi le viseur l'est calé sur la ligne de visée de l'oeil en utilisation et il va se trouver situé hors du champ visuel lorsqu'il n'est plus utilisé. Le viseur 1 peut être formé de lames planes comme décrit précedemment ou de lames courbes épousant la courbure de la visière. Le moyen de repérage de direction peut être par exemple du type optique, avec un groupement 25 de diodes électroluminescentes monté sur le casque et des moyens annexes non représentés comportant des moyens d'alimentation successive et séquentielle des diodes et des moyens de détection; le détecteur, ou capteur, est fixe sur l'avion. Des solutions de ce genre sont nombreuses, on pourra se reporter notamment au brevet français n° 2 399 033. Pour simplifier la figure on n'a pas indiqué de diodes disposées autour du viseur (telles 15 et 16 Fig. 3) pour informations directionnelles ou autres.

On peut se rendre compte que le dispositif de repérage de type magnétique peut aussi bien être utilisé dans la version casque et, de même, la solution optique peut être montée dans la version paire de lunettes. Dans le cas d'une installation fixe le repérage de direction pourra s'effectuer simplement par des appareils synchros ou capteurs de position angulaire, placés sur les axes de rotation Y et Z et commandés manuellement ou par un moteur. Il y a ainsi de nombreuse variantes d'exécution du viseur selon l'invention qui forme un appareil statique, de faible poids et encombrement et ne nécessitant, pour la partie viseur proprement dite, aucune optique collimatrice ni d'énergie autre que la lumière incidente ambiante.

## Revendications

1. Viseur comportant des moyens de visualisation (1) simultanée du paysage et d'une image projetée à l'infini sur un axe optique de visée (X) et des moyens de repérage (2) de la direction de cet axe par rapport à une direction de référence (Xo), caractérisé en ce que les moyens de visualisation utilisent un dispositif générateur d'interférences par des lames cristallines, ce dispositif groupant une lame cristalline biréfringente à faces parallèles (5) placée entre deux lames jouant le rôle de filtres optiques de polarisation (6 et 7), respectivement un polariseur et un analyseur, pour produire ladite image sous forme de franges d'interférences localisées à l'infini à partir de la lumière incidente provenant du paysage observé, l'axe optique de visée correspondant à l'axe cristallographique de la lame biréfrigente taillée perpendiculairement à cette direction.

2. Viseur selon la revendication 1, caractérisé en ce qu'il comporte des moyens additionnels de visualisation d'une information préalable d'orientation de la direction de visée.

3. Viseur selon la revendication 2, caractérisé en ce que les moyens additionnels sont constitués par des diodes électroluminescentes disposées régulièrement sur un cercle en dehors du champ de vision des franges.

4. Viseur selon l'une quelconque des revendications 1 à 3, caractérisé en ce que les moyens de visualisation sont montés dans un verre d'une paire de lunettes.

5. Viseur selon l'ensemble des revendications 3 et 4, caractérisé en ce que les diodes (15, 16) sont montées sur la lame polariseur (6), la lame critalline biréfrigente (5) étant circulaire ainsi que les lames de polarisation et de diamètre inférieur à celui des lames de polarisation (6, 7), en sorte de ménager un espace pour le passage des fils (17) d'alimentation des diodes.

6. Viseur selon l'une quelconque des revendications précédentes, caractérisé en ce que les moyens de repérage de direction sont de type magnétique.

7. Viseur selon l'ensemble des revendication 4 et 6, caractérisé en ce que les moyens de repérage de direction comportent un capteur (12) monté solidaire de la paire de lunettes.

8. Viseur selon l'une quelconque des revendications 1 à 3, caractérisé en ce que les moyens de visualisation sont intégrés dans la visière (21) d'un casque (20).

9. Viseur selon l'une quelconque des revendications 1, 2, 3, 4, 5, 8, caractérisé en ce que les moyens de repérage de direction (2) sont de type optique comportant un groupement de diodes (25) monté sur l'organe support (3, 11, 20) des moyens de visualisation (1).

10. Viseur selon l'une quelconque des revendications précédentes, caractérisé en ce que les moyens de repérage de direction (2) utilisent des moyens de calcul (14) pour commander automatiquement un allumage clignotant des diodes, à une fréquence variable en fonction du dépointage de l'axe optique de visée par rapport à une direction de visée désirée, des moyens de détection annexe étant prévus pour déterminer la direction de visée et transmettre aux moyens de calcul l'information correspondante.

**Patentansprüche**

1. Zielgerät mit Mitteln (1) zur gleichzeitigen Sichtbarmachung der Landschaft und eines ins Unendliche projizierten Bildes auf einer optischen Zielachse (X) und mit Mitteln (2) zur Erfassung der Richtung dieser Achse in bezug auf eine Bezugsachse (Xo), dadurch gekennzeichnet, daß die Mittel zur Sichtbarmachung eine Vorrichtung zur Interferenzerzeugung durch kristalline Lamellen verwenden, wobei diese Vorrichtung eine doppellichtbrechende kristalline Lamelle mit parallelen Flächen (5) zwischen zwei Lamellen enthält, die die Rolle optischer Polarisationsfilter (6 und 7) spielen, d. h. eines Polarisierers bzw. eines Analysierers, um das Bild in Form von im Unendlichen lokalisierten Interferenzstreifen zu produzieren, ausgehend von dem von der beobachteten Landschaft einfallenden Licht, wobei die optische Zielachse der kristallographische Achse der doppellichtbrennenden Lamelle entspricht, deren Schnittebene quer zu dieser Richtung verlaufen.

2. Zielgerät nach Anspruch 1, dadurch gekennzeichnet, daß es zusätzliche Mittel zur Sichtbarmachung einer vorläufigen Information betreffend die Orientierung der Zielrichtung aufweist.

3. Zielgerät nach Anspruch 2, dadurch gekennzeichnet, daß die zusätzlichen Mittel aus Elektrolumineszenzdioden bestehen, die gleichmäßig auf einem Kreis außerhalb des Sichtfelds der Streifen angeordnet sind.

4. Zielgerät nach irgendeinem der Ansprüche 1 bis 3, dadurch gekennzeichnet, daß die Mittel zur Sichtbarmachung in einem Glas einer Brille eingebaut sind.

5. Zielgerät nach der Gesamtheit der Ansprüche 3 und 4, dadurch gekennzeichnet, daß die Dioden (15, 16) auf der Polarisierlamelle (6) angeordnet sind, wobei die kristalline doppellichtbrechende Lamelle (5) wie auch die Polarisierlamellen kreisförmig sind und die erstere einen geringeren Durchmesser hat als die Polarisierlamellen (6, 7), um einen Raum für die Durchführung der Drähte (17) zur Speisung der Dioden freizuhalten.

6. Zielgerät nach irgendeinem der vorhergehenden Ansprüche, dadurch gekennzeichnet, daß die Mittel zur Erfassung der Richtung vom magnetischen Typ sind.

7. Zielgerät nach der Gesamtheit der Ansprüche 4 und 6, dadurch gekennzeichnet, daß die Mittel zur Erfassung der Richtung eine Sonde (12) aufweisen, die fest mit der Brille verbunden ist.

8. Zielgerät nach irgendeinem der Ansprüche 1 bis 3, dadurch gekennzeichnet, daß die Mittel zur Sichtbarmachung in das Visier (21) eines Helms (20) integriert sind.

9. Zielgerät nach irgendeinem der Ansprüche 1, 2, 3, 4, 5, 8, dadurch gekennzeichnet, daß die Mittel zur Erfassung der Richtung (2) vom optischen Typ sind und eine Gruppierung von Dioden (25) aufweisen, die auf dem Trägerorgan (3, 11, 20) der Mittel zur Sichtbarmachung (1) angeordnet ist.

10. Zielgerät nach irgendeinem der vorhergehenden Ansprüche, dadurch gekennzeichnet, daß die Mittel zur Erfassung der Richtung (2) Rechenmittel (14) verwenden, um automatisch ein blinkendes Aufleuchten der Dioden zu steuern, bei einer Frequenz, die variabel ist in Abhängigkeit von der Abweichung der optischen Zielachse von einer gewünschten Zielrichtung, wobei Detektormittel vorgesehen sind, um die Zielrichtung zu bestimmen und den Rechenmitteln die entsprechende Information zu übermitteln.

**Claims**

1. An aiming device comprising means (1) for the simultaneous visualization of the landscape and a picture projected to infinity on an optical aiming axis (X), and marking means (2) for marking the direction of this axis with respect to a reference direction (Xo), characterized in that the visualization means use a device which produces interferences by cristal laminae, and which employs a birefringent cristal lamina with parallel faces (5) placed between two lamiae functioning as optical polarisation filters (6 and 7), respectively a polariser and an analyser, for producing said picture in the form of interference stripes localized in the infinity in accordance with the incident light coming from the observed landscape, the optical aiming axis corresponding to the cristallographical axis of the birefringent lamina cut perpendicularly to this direction.

2. An aiming device according to claim 1, characterized in that it comprises additional visualization means of a provisional information concerning the orientation of the aiming direction.

3. An aiming device according to claim 2, characterized in that the additional means are constituted by electroluminescent diodes which are regularly spaced out on a circle outside of the field of vision of the stripes.

4. An aiming device according to any one of claims 1 to 3, characterized in that the visualization means are mounted in a glass of a pair of spectacles.

5. An aiming device according to the entity of claims 3 and 4, characterized in that the diodes (15, 16) are mounted on the polariser lamina (6), the birefringent cristal lamina (5) being circular as well as the polarisation laminae and of a diameter which is smaller than that of the polarisation laminae (6, 7), so that a space for the passage of the diode feed wires (17) is left free.

6. An aiming device according to any one of the preceding claims, characterized in that the direction marking means are of the magnetic type.

7. An aiming device according to the entity of claims 4 and 6, characterized in that the direction marking means comprise a probe (12) which is integral with the pair of spectacles.

8. An aiming device according to any one of claims 1 to 3, characterized in that the visualization means are integrated in the visor (21) of a helmet (20).

9. An aiming device according to any one of claims 1, 2, 3, 4, 5, 8, characterized in that the direction marking means (2) are of the optical type and comprise a group of diodes (25) mounted on the support organ (3, 11, 20) of the visualization means (1).

10. An aiming device according to any one of the preceding claims, characterized in that the direction marking means (2) use computer means for automatically controlling a signalling lighting of the diodes, at a frequency which is variable as a function of the deviation of the optical aiming axis with respect to a desired aiming direction, annex detection means being provided for determining the aiming direction and transmitting the corresponding to the computer means.

# FIG_1

5
7
6
0
X
4
COMMANDE
DE
POSITION
Y
2
REPERAGE
DE
DIRECTION
X/X₀
3
X₀
Z

# FIG_4

7
16
6
5
X
10
15
11
17

# FIG_2

0X
X

# FIG_3

# FIG_5